# EUROPEAN PATENT APPLICATION

(11) **EP 3 716 669 A1**
(43) Date of publication of application: **30.09.2020**
(21) Application number: 18899161.6
(22) Date of filing: 28.12.2018
(51) Int. Cl.: H04W 12/04

(54) **METHOD AND DEVICE FOR MANAGEMENT OF INTEGRITY PROTECTION KEY**

(30) Priority: 12.01.2018 CN 201810031889
(71) Applicant: Huawei Technologies Co., Ltd., Shenzhen, Guangdong 518129 (CN)
(72) Inventor: CHANG, Junren, Shenzhen, Guangdong 518129 (CN); LI, Bingzhao, Shenzhen, Guangdong 518129 (CN); WANG, Xuelong, Shenzhen, Guangdong 518129 (CN)
(74) Representative: Isarpatent
(86) International application number: PCT/CN2018/125094
(87) International publication number: WO 2019/137250

(57) **Abstract**

This application discloses an integrity protection key management method and a device. The method includes: receiving, by a communications device, a DRB integrity protection activation message sent by a network device, and generating, by the communications device, a DRB integrity protection key. Therefore, this implements generation of the DRB integrity protection key, and can support flexible and effective management of the DRB integrity protection key.

## Description

This application claims priority to Chinese Patent Application No. 201810031889.8, filed with the Chinese Patent Office on January 12, 2018 and entitled "INTEGRITY PROTECTION KEY MANAGEMENT METHOD AND DEVICE", which is incorporated herein by reference in its entirety.

### TECHNICAL FIELD

This application relates to the field of wireless communications technologies, and in particular, to an integrity protection key management method and a device.

### BACKGROUND

To improve security of user data, a recent 3GPP meeting proposed that integrity protection can be performed on a data packet carried on a data radio bearer (Data Radio Bearer, DRB). The data packet on which integrity protection needs to be performed may include: some data packets applied to an internet of things that impose a relatively high requirement for integrity protection, data packets of other specific services, and the like.

Specifically, a core network device may determine whether integrity protection needs to be performed on a data packet of a service. If integrity protection needs to be performed on the data packet, the core network device may notify a network device that the network device needs to perform integrity protection on the data packet. The core network device herein may be an access and mobility management function (Access and Mobility Management Function, AMF) network element, and the network device herein is a next generation NodeB (next generation NodeB, gNB). After receiving the notification from the core network device, the network device determines a DRB carrying the data packet, and performs integrity protection on the data packet by using a DRB integrity protection key. Therefore, a terminal device also needs to have a DRB integrity protection key that needs to be kept consistent with the DRB integrity protection key used by the network device. However, currently there is no solution for managing a DRB integrity protection key by a terminal device.

### SUMMARY

Embodiments of this application provide an integrity protection key management method and a device, to provide a solution for managing a DRB integrity protection key by a terminal device.

According to a first aspect, this application provides an integrity protection key management method. The method includes:
receiving, by a communications device, a DRB integrity protection activation message sent by a network device; and generating, by the communications device, a DRB integrity protection key.

Therefore, after receiving the DRB integrity protection activation message sent by the network device, the communications device generates the DRB integrity protection key. This implements generation of the DRB integrity protection key, and can support flexible and effective management of the DRB integrity protection key.

In a possible design, the generating, by the communications device, a DRB integrity protection key includes:
generating, by the communications device, the DRB integrity protection key when determining that a capability of the communications device satisfies a preset condition; or
generating, by the communications device, the DRB integrity protection key when determining that a service type of a first service is a preset service type; or
generating, by the communications device, the DRB integrity protection key when determining that a type of the communications device is a preset communications device type; or
generating, by the communications device, the DRB integrity protection key based on first information in the DRB integrity protection activation message, where the first information is used to instruct the communications device to generate the DRB integrity protection key.

Therefore, after receiving the DRB integrity protection activation message sent by the network device, the communications device may first complete preset determining, and generate the DRB integrity protection key when determining that a condition corresponding to the preset determining is satisfied; or generate the DRB integrity protection key when determining that the DRB integrity protection activation message carries the first information.

In a possible design, the DRB integrity protection activation message is an initial security mode command, a radio resource control RRC connection reconfiguration message, or an L2 control data packet.

Therefore, there are a plurality of possible implementation forms for the DRB integrity protection activation message. This is not limited in this application.

In a possible design, the first information includes information about a first DRB, and the first DRB is a DRB on which integrity protection needs to be performed.

Therefore, the communications device can perform integrity protection on the DRB indicated by the network device.

In a possible design, the DRB integrity protection activation message carries first synchronization indication information or a sequence number of a data packet on which integrity protection starts to be performed.

Specifically, the first radio resource control (Radio Resource Control, RRC) connection reconfiguration message further carries the first synchronization indication information; the first L2 control data packet further carries the sequence number of the data packet on which integrity protection starts to be performed; and L2 is a data link layer.

Therefore, the communications device can synchronize, with the network device, the sequence number of the data packet on which integrity protection starts to be performed by using the DRB integrity protection key.

In a possible design, the method further includes: when the communications device finds the first target data packet, starting, by the communications device, a first timer, and starting a first counter, where the target data packet is a data packet that fails in integrity protection detection, and the first counter is configured to record a quantity of found target data packets.

Therefore, a prior-art problem of unnecessary reporting of a DRB integrity protection check failure caused by relying only on a threshold is resolved.

In a possible design, the method further includes: sending, by the communications device, indication information to the network device when determining that preset duration of the first timer does not expire and the quantity recorded by the first counter is greater than or equal to a preset threshold; or
resetting, by the communications device, the first counter when determining that the preset duration of the first timer expires.

Therefore, the communications device sends the indication information to the network device when determining that the preset duration of the first timer does not expire and the quantity recorded by the first counter is greater than or equal to the preset threshold, so as to notify the network device of an integrity protection detection failure result.

In a possible design, after the sending, by the communications device, indication information to the network device, the method further includes:
stopping, by the communications device, the first timer; or
stopping, by the communications device, the first timer and resetting the first counter; or
pausing or suspending, by the communications device, the first timer and the first counter.

Therefore, after reporting the indication information, the communications device may select a manner of processing the timer and the counter.

In a possible design, the indication information is DRB integrity protection failure indication information, DRB release request information, or radio link failure indication information.

Therefore, the indication information sent by the communications device may be in a plurality of forms. This is not limited in this application.

In a possible design, the indication information includes a DRB identifier.

It should be understood that the communications device may separately configure one counter and one timer for statistics collection of each DRB on which integrity protection needs to be performed. In this case, the indication information further includes the DRB identifier. Alternatively, the communications device may configure one counter for statistics collection of all DRBs on which integrity protection needs to be performed. Therefore, the preset duration and the preset threshold may be configured for all the DRBs on which integrity protection needs to be performed, or may separately be configured for each DRB on which integrity protection needs to be performed.

In a possible design, the method further includes: determining, by the communications device, to switch from a connected mode to an inactive mode, and stopping, by the communications device, the first timer; or stopping, by the communications device, the first counter and resetting the first counter; or pausing or suspending, by the communications device, the first timer; or resetting, by the communications device, the first counter.

Therefore, after determining to switch from the connected mode to the inactive mode, the communications device may select a manner of processing the timer and the counter.

In a possible design, after the generating, by the communications device, a DRB integrity protection key, the method further includes:
preserving, by the communications device, the DRB integrity protection key until the communications device enters an idle mode or until the communications device receives a key update message or a DRB integrity protection deactivation message sent by the network device; or
preserving, by the communications device, the DRB integrity protection key until a second timer is greater than or equal to a preset threshold.

Therefore, after generating the DRB integrity protection key, the communications device preserves the DRB integrity protection key until the foregoing preset event occurs.

In a possible design, the method further includes:
deleting, by the communications device, the DRB integrity protection key when entering an idle mode; or
deleting, by the communications device, the DRB integrity protection key when determining that there is no DRB on which integrity protection needs to be performed.

Therefore, the communications device needs to delete the DRB integrity protection key in the foregoing scenario.

In a possible design, the method further includes:
after receiving the key update message sent by the network device, updating, by the communications device, the DRB integrity protection key when determining that there is a DRB on which DRB integrity protection needs to be performed; or
after receiving the key update message sent by the network device, updating, by the communications device, the DRB integrity protection key; or
deleting, by the communications device, the DRB integrity protection key when determining that the key update message includes second information, where the second information instructs the communications device to delete the DRB integrity protection key.

Therefore, after the communications device receives the key update message, there may be a plurality of possible cases. The terminal may determine, based on a determining of the terminal or the indication of the network device, whether to update the DRB integrity protection key.

In a possible design, after the generating, by the communications device, a DRB integrity protection key, the method further includes:
receiving, by the communications device, the DRB integrity protection deactivation message; and
after the communications device receives the DRB integrity protection deactivation message,
continuing preserving, by the communications device, the DRB integrity protection key; or
preserving, by the communications device, the DRB integrity protection key when determining that there is a DRB on which integrity protection needs to be performed; or
deleting, by the communications device, the DRB integrity protection key when determining that there is no DRB on which integrity protection needs to be performed; or
preserving, by the communications device, the DRB integrity protection key when determining that the DRB integrity key deactivation message includes third information, where the third information instructs the communications device to preserve the DRB integrity protection key; or
deleting, by the communications device, the DRB integrity protection key when determining that the DRB integrity protection deactivation message includes fourth information, where the fourth information instructs the communications device to delete the DRB integrity protection key.

Therefore, after the communications device receives the DRB integrity key deactivation message, the terminal may determine, based on determining of the terminal or the indication of the network device, whether to preserve the DRB integrity protection key.

In a possible design, the DRB integrity protection deactivation message includes information about a second DRB, where the second DRB is a DRB for which integrity protection is canceled.

Therefore, the communications device may cancel integrity protection on the second DRB based on the information about the second DRB in the DRB integrity protection deactivation message.

In a possible design, the DRB integrity protection deactivation message is a second RRC connection reconfiguration message or a second L2 control data packet.

Therefore, there may be a plurality of implementation forms for the DRB integrity protection deactivation message.

In a possible design, the second RRC connection reconfiguration message further carries second synchronization indication information, and the second L2 control data packet further carries a sequence number of a data packet on which integrity protection stops being performed.

Therefore, the communications device can synchronize, with the network device, the sequence number of the data packet for which integrity protection performed by using the DRB integrity protection key is canceled.

In a possible design, after the communications device switches from the connected mode to the inactive mode, the method further includes:
preserving, by the communications device, the DRB integrity protection key; or
preserving, by the communications device, the DRB integrity protection key when determining that there is a DRB on which integrity protection needs to be performed; or
receiving, by the communications device, an inactive mode entering instruction message sent by the network device, where the inactive mode entering instruction message includes fifth information, and the fifth information instructs the communications device to preserve the DRB integrity protection key.

Therefore, after the communications device enters the inactive mode, the terminal may determine, based on determining of the terminal or the indication of the network device, whether to preserve the DRB integrity protection key.

According to a second aspect, an integrity protection key management method is provided. The method includes:
generating, by a network device, a DRB integrity protection activation message; and
sending, by the network device, the DRB integrity protection activation message to a communications device.

Therefore, the network device sends the DRB integrity protection activation message, so that the communications device generates a DRB integrity protection key. This implements generation of the DRB integrity protection key, and can support flexible and effective management of the DRB integrity protection key.

In a possible design, the DRB integrity protection activation message carries first information, where the first information is used to instruct the communications device to generate the DRB integrity protection key.

Therefore, the network device instructs, by using the first information, the communications device to generate the DRB integrity protection key.

In a possible design, the DRB integrity protection activation message is an initial security mode command, a radio resource control RRC connection reconfiguration message, or an L2 control data packet.

Therefore, there are a plurality of possible implementation forms for the DRB integrity protection activation message. This is not limited in this application.

In a possible design, the first information includes information about a first DRB, and the first DRB is a DRB on which integrity protection needs to be performed.

Therefore, the communications device can perform integrity protection on the DRB indicated by the network device.

In a possible design, the first RRC connection reconfiguration message further carries first synchronization indication information, and the first L2 control data packet further carries a sequence number of a data packet on which integrity protection starts to be performed.

Therefore, the communications device can synchronize, with the network device, the sequence number of the data packet on which integrity protection starts to be performed by using the DRB integrity protection key.

In a possible design, after the sending, by the network device, the DRB integrity protection activation message, the method further includes:
receiving, by the network device, indication information, where the indication information is DRB integrity protection failure indication information, DRB release request information, or radio link failure indication information.

Therefore, the network device learns an integrity protection detection failure result from the indication information.

In a possible design, the indication information includes a DRB identifier.

Therefore, the network device may perform subsequent processing based on the DRB identifier.

In a possible design, after the sending, by the network device, the DRB integrity protection activation message, the method further includes:
sending, by the network device, a key update message, where the key update message includes second information, and the second information instructs the communications device to delete the DRB integrity protection key.

In a possible design, after the sending, by the network device, the DRB integrity protection activation message, the method further includes:
sending, by the network device, a DRB integrity protection deactivation message, where the DRB integrity protection deactivation message includes fourth information, and the fourth information instructs the communications device to delete the DRB integrity protection key.

Therefore, the network device may instruct, in a plurality of manners, the communications device to delete the DRB integrity protection key.

In a possible design, after the sending, by the network device, the DRB integrity protection activation message, the method further includes:
sending, by the network device, a DRB integrity protection deactivation message, where the DRB integrity key deactivation message includes third information, and the third information instructs the communications device to preserve the DRB integrity protection key.

In a possible design, after the sending, by the network device, the DRB integrity protection activation message, the method further includes:
sending, by the network device, an instruction message instructing the communications device to enter an inactive mode, where the inactive mode entering instruction message includes fifth information, and the fifth information instructs the communications device to preserve the DRB integrity protection key.

Therefore, the network device may instruct, in a plurality of manners, the communications device to preserve the DRB integrity protection key.

In a possible design, the DRB integrity protection deactivation message includes information about a second DRB, where the second DRB is a DRB for which integrity protection is canceled.

Therefore, the network device can indicate the DRB for which integrity protection is canceled.

In a possible design, the DRB integrity protection deactivation message is a second RRC connection reconfiguration message or a second L2 control data packet.

Therefore, there may be a plurality of implementation forms for the DRB integrity protection deactivation message.

In a possible design, the second RRC connection reconfiguration message further carries second synchronization indication information, and the second L2 control data packet further carries a sequence number of a data packet on which integrity protection stops being performed.

Therefore, the communications device can synchronize, with the network device, the sequence number of the data packet for which integrity protection performed by using the DRB integrity protection key is canceled.

According to a third aspect, a communications device is provided. The communications device includes:
a receiving unit, configured to receive a data radio bearer DRB integrity protection activation message sent by a network device; and
a processing unit, configured to generate a DRB integrity protection key.

In a possible design, the processing unit is specifically configured to:
generate the DRB integrity protection key when determining that a capability of the communications device satisfies a preset condition; or
generate the DRB integrity protection key when determining that a service type of a first service is a preset service type; or
generate the DRB integrity protection key when determining that a type of the communications device is a preset communications device type; or
generate the DRB integrity protection key based on first information in the DRB integrity protection activation message, where the first information is used to instruct to generate the DRB integrity protection key.

In a possible design, the DRB integrity protection activation message carries first synchronization indication information or a sequence number of a data packet on which integrity protection starts to be performed.

In a possible design, the processing unit is further configured to:
when finding the first target data packet, start a first timer, and start a first counter, where the target data packet is a data packet that fails in integrity protection detection, and the first counter is configured to record a quantity of found target data packets.

In a possible design, the processing unit is further configured to determine that preset duration of the first timer does not expire and the quantity recorded by the first counter is greater than or equal to a preset threshold; and a sending unit is configured to send indication information to the network device; or
the processing unit is further configured to reset the first counter when determining that the preset duration of the first timer expires.

In a possible design, the processing unit is further configured to:
after the sending unit sends the indication information to the network device, stop the first timer; or
stop the first timer and reset the first counter; or
pause or suspend the first timer and the first counter.

In a possible design, the indication information is DRB integrity protection failure indication information, DRB release request information, or radio link failure indication information.

In a possible design, the processing unit is further configured to:
determine to switch from a connected mode to an inactive mode inactive mode, and stop the first timer; or
stop the first counter and reset the first counter; or
pause or suspend the first timer; or
reset the first counter.

In a possible design, the processing unit is further configured to:
after the processing unit generates the DRB integrity protection key, preserve the DRB integrity protection key until the processing unit enters an idle mode or until the processing unit receives a key update message or a DRB integrity protection deactivation message sent by the network device; or
preserve the DRB integrity protection key until a second timer is greater than or equal to a preset threshold.

In a possible design, the processing unit is further configured to:
after the receiving unit receives the key update message sent by the network device, update the DRB integrity protection key when determining that there is a DRB on which DRB integrity protection needs to be performed; or
after the receiving unit receives the key update message sent by the network device, update the DRB integrity protection key; or
delete the DRB integrity protection key when determining that the key update message includes second information, where the second information instructs to delete the DRB integrity protection key.

In a possible design, the receiving unit is further configured to: after the processing unit generates the DRB integrity protection key, receive the DRB integrity protection deactivation message; and
the processing unit is further configured to: after the communications device receives the DRB integrity protection deactivation message, continue preserving the DRB integrity protection key; or
preserve the DRB integrity protection key when determining that there is a DRB on which integrity protection needs to be performed; or
delete the DRB integrity protection key when determining that there is no DRB on which integrity protection needs to be performed; or
preserve the DRB integrity protection key when determining that the DRB integrity key deactivation message includes third information, where the third information instructs to preserve the DRB integrity protection key; or
delete the DRB integrity protection key if when determining that the DRB integrity protection deactivation message includes fourth information, where the fourth information instructs to delete the DRB integrity protection key.

In a possible design, the processing unit is further configured to:
after switching from the connected mode to the inactive mode, preserve the DRB integrity protection key; or
preserve the DRB integrity protection key when determining that there is a DRB on which integrity protection needs to be performed; or
receive an inactive mode entering instruction message sent by the network device, where the inactive mode entering instruction message includes fifth information, and the fifth information instructs to preserve the DRB integrity protection key.

According to a fourth aspect, a network device is provided. The network device includes:
a processing unit, configured to generate a DRB integrity protection activation message; and
a sending unit, configured to send the DRB integrity protection activation message to a communications device.

In a possible design, the DRB integrity protection activation message carries first information, where the first information is used to instruct the communications device to generate the DRB integrity protection key.

In a possible design, the DRB integrity protection activation message further carries first synchronization indication information or a sequence number of a data packet on which integrity protection starts to be performed.

In a possible design, the receiving unit is configured to: after the sending unit sends the DRB integrity protection activation message, receive indication information, where the indication information is DRB integrity protection failure indication information, DRB release request information, or radio link failure indication information.

In a possible design, the sending unit is further configured to:
after the sending unit sends the DRB integrity protection activation message, send a key update message, where the key update message includes second information, and the second information instructs the communications device to delete the DRB integrity protection key; or
send a DRB integrity protection deactivation message, where the DRB integrity key deactivation message includes third information, and the third information instructs the communications device to preserve the DRB integrity protection key; or
send a DRB integrity protection deactivation message, where the DRB integrity protection deactivation message includes fourth information, and the fourth information instructs the communications device to delete the DRB integrity protection key; or
send an instruction message instructing the communications device to enter an inactive mode, where the inactive mode entering instruction message includes fifth information, and the fifth information instructs the communications device to preserve the DRB integrity protection key.

According to a fifth aspect, a communications device is provided, including a processor and a transceiver. The transceiver is configured to receive a DRB integrity protection activation message sent by a network device; and the processor is configured to generate a DRB integrity protection key. The transceiver and the processor perform functions of the receiving unit/sending unit and the processing unit in the third aspect.

According to a sixth aspect, a communications device is provided, including a processor and an interface. The processor implements functions of the processing unit in the third aspect; and the interface implements functions of the receiving unit/sending unit in the third aspect.

According to a seventh aspect, a communications device is provided, including a memory, a processor, and a program that is stored in the memory and that can be run on the processor. The processor executes the program to implement the method in the first aspect. It should be noted that the memory may be non-volatile or volatile. The memory may be located inside the communications device, or may be located outside the communications device.

According to an eighth aspect, a communications device is provided. The communications device may use the method in the first aspect. The communications device may be a terminal, or may be hardware implementing a similar function.

According to a ninth aspect, a network device is provided. The network device may use the method in the second aspect. It should be understood that the network device may alternatively be hardware implementing a similar function.

According to a tenth aspect, a network device is provided, including at least one processor. The processor is coupled to a memory, and the processor is configured to: read an instruction in the memory, and perform the method in the second aspect according to the instruction.

According to an eleventh aspect, a computer readable storage medium is provided. The computer readable storage medium stores an instruction. When the instruction is being executed, the methods in the first aspect to the third aspect are performed.

### BRIEF DESCRIPTION OF DRAWINGS

FIG. 1 is an overview flowchart of an integrity protection key management method according to an embodiment of this application;
FIG. 2 is a specific flowchart of managing a DRB-specific integrity protection key by a communications device according to an embodiment of this application;
FIG. 3 is a specific flowchart 2 of managing a DRB integrity protection key by a communications device according to an embodiment of this application;
FIG. 4 is a flowchart of storing a DRB integrity protection key by a communications device after the communications device enters an inactive mode according to an embodiment of this application;
FIG. 5 is a flowchart of managing a DRB integrity protection key by a communications device in a switching process performed by the communications device according to an embodiment of this application;
FIG. 6 is a flowchart of performing statistics collection on a data packet that fails in integrity protection detection performed by a communications device according to an embodiment of this application;
FIG. 7 is a schematic structural diagram of a communications device provided in an embodiment of the present invention, according to an embodiment of this application;
FIG. 8 is another schematic structural diagram of a communications device provided in an embodiment of the present invention, according to an embodiment of this application;
FIG. 9 is another schematic structural diagram of a communications device provided in an embodiment of the present invention, according to an embodiment of this application;
FIG. 10 is another schematic structural diagram of a communications device provided in an embodiment of the present invention, according to an embodiment of this application;
FIG. 11 is a schematic structural diagram of a network device provided in an embodiment of the present invention, according to an embodiment of this application;
FIG. 12 is another schematic structural diagram of a network device provided in an embodiment of the present invention, according to an embodiment of this application;
FIG. 13 is another schematic structural diagram of a network device provided in an embodiment of the present invention, according to an embodiment of this application; and
FIG. 14 is another schematic structural diagram of a network device provided in an embodiment of the present invention, according to an embodiment of this application.

### DESCRIPTION OF EMBODIMENTS

The following describes the embodiments of this application with reference to accompanying drawings.

A network device in the embodiments of this application is an access device, in a mobile communications system, to which a communications device is wirelessly connected. The network device may be a NodeB (NodeB), an evolved NodeB (eNodeB), a gNB in a 5G mobile communications system, a next generation NodeB (next generation NodeB, gNB), a base station in a future mobile communications system, an access node in a Wi-Fi system, or the like. A specific technology and a specific device form that are used for the network device are not limited in the embodiments of this application.

A communications device in the embodiments of this application may be a terminal device (Terminal equipment), or may be referred to as a terminal, user equipment (user equipment, UE), a mobile station (mobile station, MS), a mobile terminal (mobile terminal, MT), or the like. The terminal device may be a mobile phone (mobile phone), a tablet computer (Pad), a computer having a wireless receiving and sending function, a virtual reality (Virtual Reality, VR) terminal device, an augmented reality (Augmented Reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), and a wireless terminal in a smart home (smart home), a chip, or the like.

It should be understood that a DRB integrity protection key in the embodiments of this application is a DRB-specific integrity protection key, and the key is used for performing integrity protection on a data packet that is sent by using a DRB. That integrity protection needs to be performed on a DRB means that integrity protection needs to be performed on a data packet carried on the DRB. That integrity protection on a DRB is canceled means that integrity protection on a data packet carried on the DRB is canceled. In the embodiments of this application, deleting a DRB integrity protection key by a communications device has a same meaning as releasing the DRB integrity protection key by the communications device. In the embodiments of this application, preserving a DRB integrity protection key by a communications device has a same meaning as storing the DRB integrity protection key by the communications device. In the embodiments of this application, pausing a first timer and a first counter by a communications device has a same meaning as suspending the first timer and the first counter by the communications device.

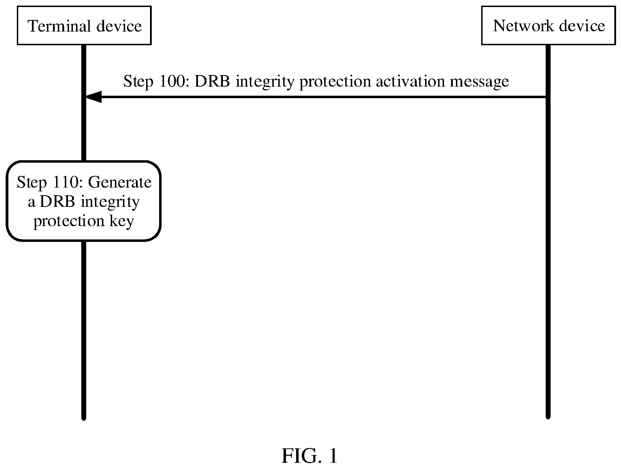

Referring to FIG. 1, an embodiment of this application provides an integrity protection key management method. The method includes the following steps:
Step 100: A network device sends a DRB integrity protection activation message to a communications device.
Step 110: The communications device generates a DRB integrity protection key.

Specifically, in step 110, the communications device may generate the DRB integrity protection key in the following different manners.

Manner 1: The UE determines, by determining whether a capability of the UE satisfies a preset condition, whether to generate the DRB integrity protection key, and when determining that the capability of the UE satisfies the preset condition, the UE generates the DRB integrity protection key; otherwise, the UE does not generate the DRB integrity protection key.

For example, when determining, based on a security processing capability of the UE, that the security processing capability of the UE satisfies the preset condition, the UE generates the DRB integrity protection key.

For another example, when determining, based on a CPU processing capability of the UE, that the CPU processing capability of the UE satisfies the preset condition, the UE generates the DRB integrity protection key.

In addition, that the communications device determines whether the capability of the communications device satisfies the preset condition may be: Based on a preset data rate that supports DRB integrity protection, the communications device determines whether the capability of the communications device can support a service with a specific data rate or integrity protection on a data packet carried on a DRB corresponding to the service.

For example, if the communications device supports integrity protection performed only on a data packet of a service whose data rate is less than 100 kbps, when a data transmission rate corresponding to a DRB for which DRB integrity protection is currently requested is 80 kbps, the communications device determines that the communications device can support integrity protection on the DRB, and generates the DRB integrity protection key. When a data transmission rate corresponding to a DRB for which DRB integrity protection is currently requested is 200 bps, the communications device determines that the communications device cannot support integrity protection on the DRB, and does not generate the DRB integrity protection key.

Therefore, the preset condition herein may be a rate threshold. A value of the rate threshold may be determined by the communications device based on the capability of the communications device, or may be determined through negotiation between the communications device and the network device by using a related message procedure.

Manner 2: The UE determines, by determining whether a service type of a first service is a preset service type, whether to generate the DRB integrity protection key, and when determining that the service type of the first service is the preset service type, the UE generates the DRB integrity protection key; otherwise, the UE does not generate the DRB integrity protection key.

It should be understood that the first service herein is a service to be established or to be initiated by the communications device. A core network device may predetermine a service type of a service of a data packet on which integrity protection needs to be performed, and notify the communications device of the service type. Therefore, the communications device may determine, by determining whether the service type of the first service is the service type notified in advance, whether to generate the DRB integrity protection key.

Manner 3: The UE determines, by determining whether a type of the UE is a preset communications device type, whether to generate the DRB integrity protection key, and when determining that the type of the UE is the preset communications device type, the UE generates the DRB integrity protection key; otherwise, the UE does not generate the DRB integrity protection key.

For example, when determining that a type of the UE is an internet-of-things communications device, the UE generates the DRB integrity protection key.

In conclusion, in all the foregoing three manners, the communications device determines whether to generate the DRB integrity protection key, without depending on a decision of the network device.

Manner 4: The communications device generates the DRB integrity protection key based on first information carried in the DRB integrity protection activation message, where the first information is used to instruct the communications device to generate the DRB integrity protection key.

The DRB integrity protection activation message may be any one of the following three types of messages.

### (a) Initial security mode command

In the prior art, the initial security mode command is used to instruct the communications device to generate a signaling radio bearer (signaling radio bearers, SRB) encryption key and an SRB integrity protection key, and to generate a DRB encryption key.

Specifically, the first information carried in the initial security mode command may explicitly instruct the communications device to generate the DRB integrity protection key, or may implicitly instruct the communications device to generate the DRB integrity protection key.

In a possible design, when determining that the initial security mode command carries a sequence number of an integrity protection algorithm, and/or when determining that the security mode command message carries information indicating that a DRB-specific integrity protection key needs to be generated, the communications device generates the DRB integrity protection key.

### (b) RRC connection reconfiguration message

The first information carried in the RRC connection reconfiguration message includes information about a first DRB, and the first DRB is a DRB on which integrity protection needs to be performed.

Therefore, when determining that the RRC reconfiguration message carries the information about the first DRB, the communications device generates the DRB integrity protection key; and the communications device performs, by using the generated DRB integrity protection key, integrity protection on a data packet that is sent by using the first DRB. However, in this case, the network device may not know a specific data packet, in the data packet received by using the first DRB, on which integrity protection starts to be performed.

For example, when sending a data packet whose sequence number is 10 to the network device by using a DRB1, the communications device receives the RRC reconfiguration message, determines that the RRC reconfiguration message carries information about the DRB1, and generates the DRB integrity protection key. At the same time, the communications device continues sending a data packet to the network device by using the DRB1, and the communications device may start to perform, by using the DRB integrity key, integrity protection on a data packet whose sequence number is 12, but the network device cannot determine a sequence number of a data packet on which integrity protection starts to be performed.

Therefore, in a possible design, the RRC reconfiguration message further carries synchronization indication information.

In this case, after generating the DRB integrity protection key, the communications device performs a synchronization process, for example, performs a process of random access to the network device. In addition, after the random access succeeds, the communications device starts to perform, by using the DRB integrity protection key, integrity protection on the data packet that is sent by using the first DRB. Therefore, in the synchronization process, the communications device can synchronize, with the network device, the sequence number of the data packet on which integrity protection starts to be performed by using the DRB integrity protection key.

### (c) L2 control data packet

The L2 control data packet may be specifically a medium access control control element (MAC Control Element, MAC CE), a radio link control (Radio Link Control, RLC) layer control data packet, or a packet data convergence protocol (Packet Data Convergence Protocol, PDCP) layer control data packet.

Same as the foregoing (b), the first information carried in the L2 includes information about a first DRB, and the first DRB is a DRB carrying a data packet on which integrity protection needs to be performed.

Therefore, when determining that the L2 control data packet carries the information about the first DRB, the communications device generates the integrity protection key; and the communications device performs, by using the generated DRB integrity protection key, integrity protection on a data packet that is sent by using the first DRB. Likewise, in this case, the network device may not know a specific data packet, in the data packet received by using the first DRB, on which integrity protection starts to be performed.

In a possible design, the L2 control data packet further carries a sequence number of a data packet on which integrity protection starts to be performed. In this case, after generating the DRB integrity protection key, the communications device performs, by using the DRB integrity protection key, integrity protection on the data packet that is sent by using the first DRB, starting from the data packet corresponding to the sequence number indicated by the L2 control data packet.

For example, the sequence number, of the data packet, indicated by the L2 control data packet is 12. In this case, the data packet whose sequence number is 12 and that is sent by using the first DRB is the first data packet on which integrity protection is performed by using the DRB integrity protection key. Then, the DRB integrity protection key is used to perform integrity protection on a data packet that is subsequently sent by using the first DRB.

Therefore, in a possible design, the L2 control data packet further carries the sequence number of the data packet on which integrity protection starts to be performed.

In this case, after generating the DRB integrity protection key, the communications device starts to perform integrity protection on the data packet corresponding to the sequence number indicated by the L2 control data packet. Therefore, the communications device can synchronize, with the network device, the sequence number of the data packet on which integrity protection starts to be performed by using the DRB integrity protection key.

It should be understood that when the DRB integrity protection activation message includes the information about the first DRB, if the information about the first DRB is DRB information received for the first time, the communications device generates the DRB integrity protection key. If the information about the first DRB is DRB information received not for the first time, the communications device may use a stored DRB integrity protection key. When the communications device does not store a DRB integrity protection key, the communications device generates the DRB integrity protection key.

In conclusion, it can be learnt that after the communications device receives the DRB integrity protection activation message sent by the network device, the communications device may determine whether the DRB integrity protection key needs to be generated; or the network device may determine, based on the first information carried in the DRB integrity protection activation message, whether the DRB integrity protection key needs to be generated.

In addition, in a possible design, after generating the DRB integrity protection key, the communications device receives a DRB integrity protection deactivation message sent by the network device.

The DRB integrity protection deactivation message may be an RRC reconfiguration message or an L2 control data packet.

The DRB integrity protection deactivation message may carry information about a second DRB, where the second DRB is a DRB for which integrity protection is canceled. It should be understood that the first DRB and the second DRB may be identical or different in this embodiment of this application.

When determining that the DRB integrity protection deactivation message carries the information about the second DRB, the communications device cancels integrity protection on a data packet that is sent by using the second DRB.

Further, the communications device may continue preserving the DRB integrity protection key.

Alternatively, when the communications device determines that there is a DRB carrying a data packet on which integrity protection needs to be performed, that is, integrity protection needs to be performed on a data packet sent by using another DRB, the communications device stores the DRB integrity protection key. Therefore, whether the communications device stores the DRB integrity protection key is determined by the communications device.

Alternatively, the communications device stores the DRB integrity protection key based on a third message carried in the DRB integrity protection deactivation message, where the third information instructs the communications device to store the DRB integrity protection key.

Specifically, the third information may explicitly instruct the communications device to store the DRB integrity protection key, or may implicitly instruct the communications device to store the DRB integrity protection key.

In a possible design, when determining that the DRB integrity protection deactivation message does not carry the sequence number of the integrity protection algorithm, or when determining that the DRB integrity protection deactivation message carries information instructing the communications device to store the DRB integrity protection key, the communications device stores the DRB integrity protection key.

In a possible design, when determining that the DRB integrity protection deactivation message carries the sequence number of the integrity protection algorithm, or when determining that the DRB integrity protection deactivation message carries information instructing the communications device not to store the DRB integrity protection key, the communications device deletes the DRB integrity protection key.

Likewise, to ensure that the communications device and the network device can synchronize a sequence number of a data packet for which integrity protection performed by using the DRB integrity protection key ends, in a possible design, the RRC connection reconfiguration message carrying a second message further carries synchronization indication information. In this case, after canceling integrity protection on the data packet that is sent by using the second DRB, the communications device performs a synchronization process, for example, performs a process of random access to the network device. In addition, after the random access succeeds, the communications device stops integrity protection performed, by using the DRB integrity protection key, on the data packet that is sent by using the second DRB.

In another possible design, the L2 control data packet further carries a sequence number of a data packet on which integrity protection stops being performed.

In this case, after canceling integrity protection on the data packet that is sent by using the second DRB, the communications device stops integrity protection performed by using the DRB integrity protection key, starting from the data packet corresponding to the sequence number indicated by the L2 control data packet.

For example, the sequence number, of the data packet, indicated by the L2 control data packet is 12. In this case, the data packet whose sequence number is 12 and that is sent by using the first DRB is the first data packet on which integrity protection is not performed by using the DRB integrity protection key. Then, the DRB integrity protection key is not used to perform integrity protection on a data packet that is subsequently sent by using the first DRB.

In a possible design, the communications device sends a DRB integrity protection deactivation complete message to the network device.

In addition, the communications device may further store, delete, or update the DRB integrity protection key based on the preset condition or the indication of the network device.

Specifically, the storing, by the communications device, the DRB integrity protection key includes but is not limited to the following several possible cases.

After generating the DRB integrity protection key, the communications device stores the DRB integrity protection key until the communications device enters an idle mode or until the communications device receives a key update message or the DRB integrity protection deactivation message sent by the network device.

Alternatively, the communications device preserves the DRB integrity protection key until a second timer is greater than or equal to a preset threshold.

The second timer is started when the UE starts to store the DRB integrity protection key or generates the DRB integrity protection key. Alternatively, the second timer may be started when the communications device determines that currently there is no DRB on which integrity protection needs to be performed, and is stopped and reset when the communications device determines that there is at least one DRB on which integrity protection needs to be performed. In addition, when the second timer is greater than or equal to the preset threshold, the DRB integrity protection key is deleted.

Alternatively, after switching from a connected mode to an inactive (inactive) mode, the communications device stores the DRB integrity protection key.

Alternatively, the communications device stores the DRB integrity protection key when determining that there is a DRB on which integrity protection needs to be performed.

Alternatively, the communications device receives an inactive mode entering instruction message sent by the network device, where the inactive mode entering instruction message includes fifth information, and the fifth information instructs the communications device to preserve the DRB integrity protection key.

The fifth information may be explicit or implicit instruction information.

It should be understood that the communications device decides to enter the inactive mode, or the communications device enters the inactive mode after receiving the inactive mode entering instruction information sent by the network device.

Further, when the communications device needs to switch from the inactive mode to the connected mode, or when the UE needs to directly perform data transmission in the inactive mode, for a DRB on which integrity protection needs to be performed, the UE uses the stored DRB integrity protection key to encrypt/decrypt data transmitted on the DRB.

The deleting, by the communications device, the DRB integrity protection key includes but is not limited to the following several possible cases.

The communications device deletes the DRB integrity protection key when entering an idle mode.

Alternatively, the communications device deletes the DRB integrity protection key when determining that there is no DRB on which integrity protection needs to be performed.

Alternatively, the communications device deletes the DRB integrity protection key when determining that the DRB integrity protection deactivation message includes fourth information, where the fourth information instructs the communications device to delete the DRB integrity protection key.

The fourth information may be explicit or implicit instruction information.

The updating, by the communications device, the DRB integrity protection key includes but is not limited to the following several possible cases.

After receiving the key update message sent by the network device, the communications device updates the DRB integrity protection key when determining that there is a DRB on which DRB integrity protection needs to be performed.

Alternatively, after receiving the key update message sent by the network device, the communications device updates the DRB integrity protection key.

Alternatively, the communications device deletes the DRB integrity protection key when determining that the key update message includes second information, where the second information instructs the communications device to delete the DRB integrity protection key.

The second information may be explicit or implicit instruction information.

An embodiment of this application further provides a method for performing statistics collection on a data packet that fails in integrity protection detection.

When finding the first target data packet, the communications device starts a first timer, and starts a first counter, where the target data packet is a data packet that fails in integrity protection detection, and the first counter is configured to record a quantity of found target data packets.

Therefore, the communications device does not start the first timer before finding the first target data packet. After finding the first target data packet, the communications device starts the first timer, and adds 1 to a count (COUNT) value of the first counter. Then, during running of the first counter, the communications device adds 1 to the count value of the first counter each time when the communications device finds one target data packet.

The communications device sends indication information to the network device when determining that preset duration of the first timer does not expire and the quantity recorded by the first counter is greater than or equal to a preset threshold. The indication information is DRB integrity protection failure indication information, DRB release request information, or radio link failure indication information.

It should be understood that the communications device may separately configure one counter and one timer for statistics collection of each DRB on which integrity protection needs to be performed. In this case, the indication information further includes a DRB identifier. Alternatively, the communications device may configure one counter for statistics collection of all DRBs on which integrity protection needs to be performed. Therefore, the preset duration and the preset threshold may be configured for all the DRBs on which integrity protection needs to be performed, or may separately be configured for each DRB on which integrity protection needs to be performed.

The communications device resets the first counter when determining that the preset duration of the first timer expires and the quantity recorded by the first counter is less than the preset threshold.

It should be understood that resetting the first counter may be setting the first counter to zero or may be another preset configuration. This is not limited in this application.

In a possible design, after sending the indication information to the network device, the communications device stops the first timer; or the communications device stops the first timer and resets the first counter; or the communications device pauses or suspends the first timer and the first counter.

In a possible design, after sending the indication information, the communications device suspends the first timer and the first counter, and restarts or resets the first timer after receiving a DRB reconfiguration message sent by a network; or resets the first counter after receiving the DRB reconfiguration message.

Further, the communications device determines to switch from a connected mode to an inactive mode, and the communications device stops the first timer; or
the communications device stops the first counter and resets the first counter; or
the communications device pauses or suspends the first timer; or
the communications device resets the first counter.

When entering the connected mode again, the communications device may resume or restart the first timer for timing, or resume or restart the first counter for counting.

In a possible design, when determining that the preset duration of the first timer does not expire and that the communications device switches from the connected mode to the inactive mode, the communications device stops the first timer and resets the first counter; or
when determining that the preset duration of the first timer does not expire and that the communications device switches from the connected mode to the inactive mode, the communications device pauses the first timer, and stores the quantity recorded by the first counter; and when entering the connected mode again, resumes the first counter. The first counter continues recording, starting from the recorded quantity.

### Embodiment 1

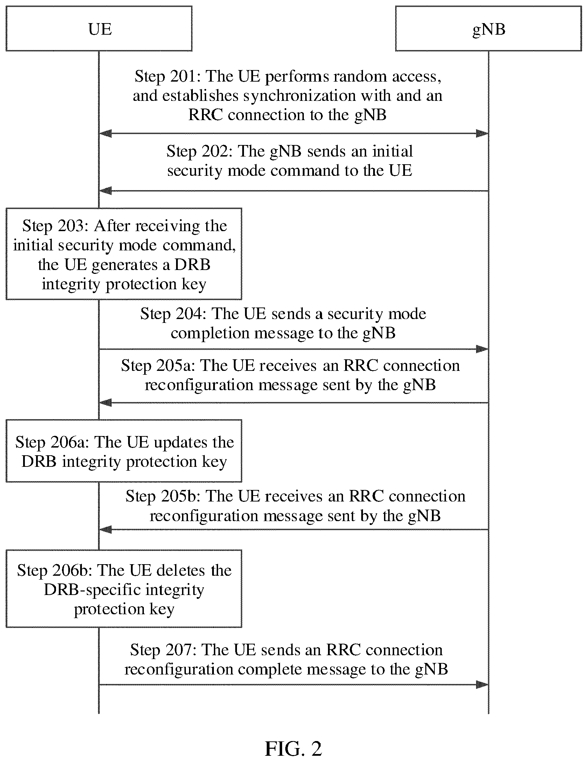

FIG. 2 is a specific flowchart 1 of managing a DRB-specific integrity protection key by a communications device.

Step 201: The UE performs random access, and establishes synchronization with and an RRC connection to a gNB.

Step 202: The gNB sends an initial security mode command to the UE.

Step 203: After receiving the initial security mode command, the UE generates a DRB integrity protection key.

Specifically, the communications device may use the manner 1, the manner 2, the manner 3, or the manner corresponding to (4a) in the embodiment shown in FIG. 1 to determine whether the DRB integrity protection key needs to be generated. Details are not repeated.

After generating the DRB integrity protection key, the UE stores the DRB integrity protection key.

Step 204: The UE sends a security mode complete message to the gNB.

Step 205a: The UE receives an RRC connection reconfiguration message sent by the gNB.

The RRC connection reconfiguration message carries an identifier of an integrity protection algorithm and/or information instructing the communications device to update the DRB integrity protection key.

Step 206a: The UE updates the DRB integrity protection key.

When the RRC connection reconfiguration message carries the identifier of the integrity protection algorithm, the communications device updates the DRB integrity protection key based on the integrity protection algorithm corresponding to the identifier of the integrity protection algorithm.

Step 205b: The gNB sends an RRC connection reconfiguration message to the UE.

The RRC connection reconfiguration message carries information instructing the communications device to delete the DRB integrity protection key or does not carry an identifier of an integrity protection algorithm.

Step 206b: The UE deletes the DRB-specific integrity protection key.

Step 207: The UE sends an RRC connection reconfiguration complete message to the gNB.

Therefore, in Embodiment 1, generation, storage, update, and deletion of the DRB integrity protection key are implemented, and flexible and effective management of the DRB integrity protection key can be supported.

### Embodiment 2

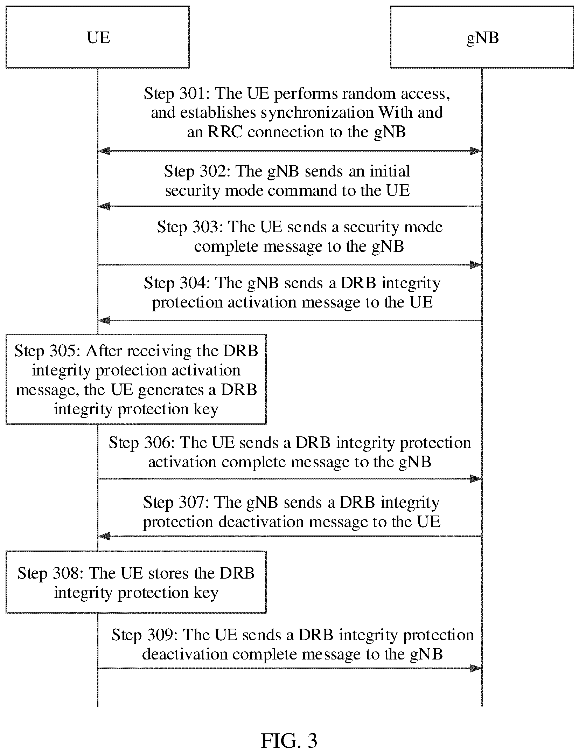

FIG. 3 is a specific flowchart 2 of managing a DRB integrity protection key by a communications device.

Step 301: The UE performs random access, and establishes synchronization with and an RRC connection to a gNB.

Step 302: The UE receives an initial security mode command sent by the gNB.

In this case, the initial security mode command does not carry a first message, and does not trigger the communications device to determine whether a DRB integrity protection key needs to be generated.

Step 303: The UE sends a security mode complete message to the gNB.

Step 304: The gNB sends a DRB integrity protection activation message to the UE.

In this case, the DRB integrity protection activation message is (4b) or (4c) in the embodiment shown in FIG. 1. Details are not repeated.

It is assumed that the DRB integrity protection activation message is an RRC connection reconfiguration message, where the RRC connection reconfiguration message carries synchronization information and information about a DRB 1.

Step 305: After receiving the DRB integrity protection activation message, the UE generates a DRB integrity protection key.

Specifically, after generating the DRB integrity protection key, the UE performs a synchronization process. In addition, after the random access succeeds, the UE performs, by using the DRB integrity protection key, integrity protection on a data packet carried on the DRB1.

After generating the DRB integrity protection key, the UE stores the DRB integrity protection key.

Step 306: The UE sends a DRB integrity protection activation complete message to the gNB.

Step 307: The gNB sends a DRB integrity protection deactivation message to the UE.

The DRB integrity protection deactivation message includes the information about the DRB1, and carries information instructing the communications device to store the DRB integrity protection key.

Step 308: The UE stores the DRB integrity protection key.

Specifically, the UE cancels integrity protection performed, by using the DRB integrity protection key, on the data packet carried on the DRB 1, and performs a synchronization process.

Step 309: The UE sends a DRB integrity protection deactivation complete message to the gNB.

It should be understood that specific content of the DRB integrity protection activation message and specific content of the DRB integrity protection deactivation message are merely used as examples, and do not constitute any limitation on this application.

Therefore, in Embodiment 2, generation, storage, update, and deletion of the DRB integrity protection key are implemented, and flexible and effective management of the DRB integrity protection key can be supported.

### Embodiment 3

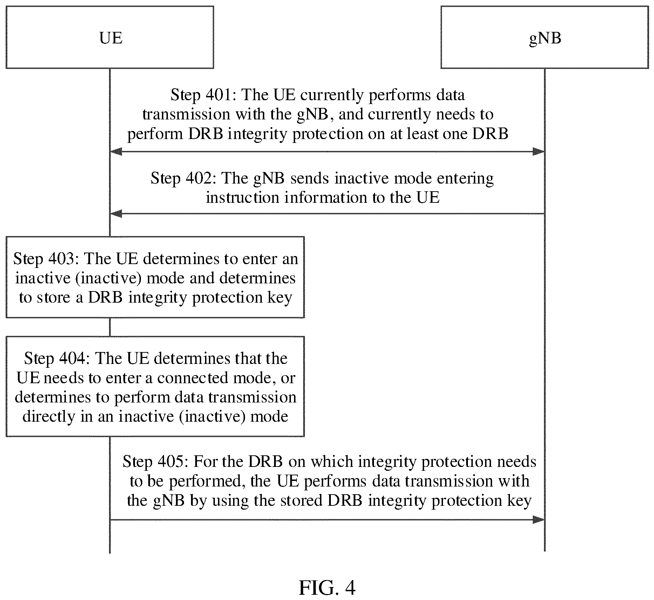

FIG. 4 is a flowchart of storing a DRB integrity protection key by a communications device after the communications device enters an inactive mode.

Step 401: The UE currently performs data transmission with a gNB, and currently needs to perform DRB integrity protection on at least one DRB.

Step 402: The gNB sends inactive mode entering instruction information to the UE.

Step 403: The UE determines to enter an inactive mode and determines to store a DRB integrity protection key.

Specifically, the UE stores the DRB integrity protection key when determining that there is a DRB on which integrity protection needs to be performed.

Step 404: The UE determines that the UE needs to enter a connected mode, or determines to perform data transmission directly in an inactive mode.

Step 405: For the DRB on which integrity protection needs to be performed, the UE performs data transmission with the gNB by using the stored DRB integrity protection key.

Therefore, in Embodiment 3, storage and deletion of the DRB integrity protection key in the inactive mode are implemented, and flexible and effective management of the DRB integrity protection key can be supported.

### Embodiment 4

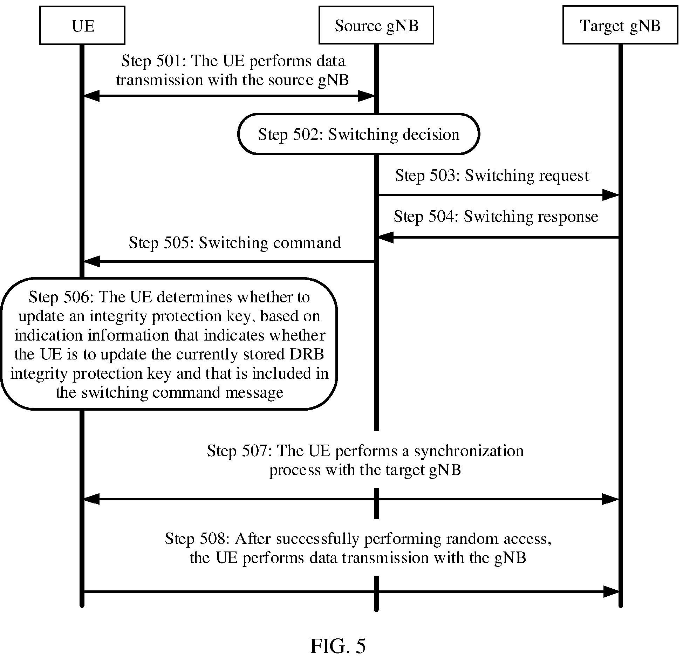

FIG. 5 is a flowchart of managing a DRB integrity protection key by a communications device in a switching process performed by the communications device.

Step 501: The UE performs data transmission with a source gNB.

The UE currently stores a DRB integrity protection key. Specifically, it is assumed that the UE and the source gNB need to perform DRB integrity protection on at least one DRB.

Step 502: The source gNB makes a switching decision.

Specifically, the source gNB may make the switching decision based on a measurement result reported by the UE.

Step 503: The source gNB sends a switching request message to a target gNB.

The switching request message may include at least one of the following information:
information instructing the UE to store the DRB integrity protection key;
information about the DRB on which integrity protection needs to be performed; and
information about a DRB integrity protection algorithm.

Step 504: After receiving the switching request message sent by the source gNB, the target gNB sends a switching request response message to the source gNB.

The switching request response message may include at least one of the following information:
indication information indicating whether the UE is to update the currently stored DRB integrity protection key; and
the information about the DRB integrity protection algorithm.

Step 505: The source gNB sends a switching command message to the UE after receiving the switching request response message sent by the target gNB.

Sometimes, the switching command message is also referred to as an RRC reconfiguration message that carries synchronization indication information and that is used for performing key updating, or an RRC reconfiguration message that carries key update instruction information.

The switching command message includes at least one of the following information:
the indication information indicating whether the UE is to update the currently stored DRB integrity protection key; and
the information about the DRB integrity protection algorithm.

Step 506: After receiving the switching command message, the UE determines whether to update the integrity protection key, based on the indication information that indicates whether the UE is to update the currently stored DRB integrity protection key and that is included in the switching command message.

If the switching command message instructs the UE to update the DRB integrity protection key, the UE updates the DRB integrity protection key, and then stores an updated DRB integrity protection key. Otherwise, if the switching command instructs the UE not to update the DRB integrity protection key, the UE deletes the stored DRB integrity protection key.

Alternatively, if the switching command message includes the DRB integrity protection algorithm, the UE updates the integrity protection key based on the DRB integrity protection algorithm. If the switching command message does not include the DRB integrity protection algorithm, the UE deletes the DRB integrity protection key.

Step 507: The UE performs a synchronization process with the target gNB.

Step 508: After successfully performing random access, the UE performs data transmission with the gNB.

In addition, when the UE and the source gNB have no DRB that requires integrity protection, and the source gNB determines that the UE does not store the DRB integrity protection key, in step 503 of sending, by the source gNB, the switching request message to the target gNB, the switching request message may include indication information indicating that the UE does not store the DRB integrity protection key.

Therefore, in Embodiment 4, update and deletion of the DRB integrity protection key in the switching process are implemented, and flexible and effective management of the DRB integrity protection key can be supported.

### Embodiment 5

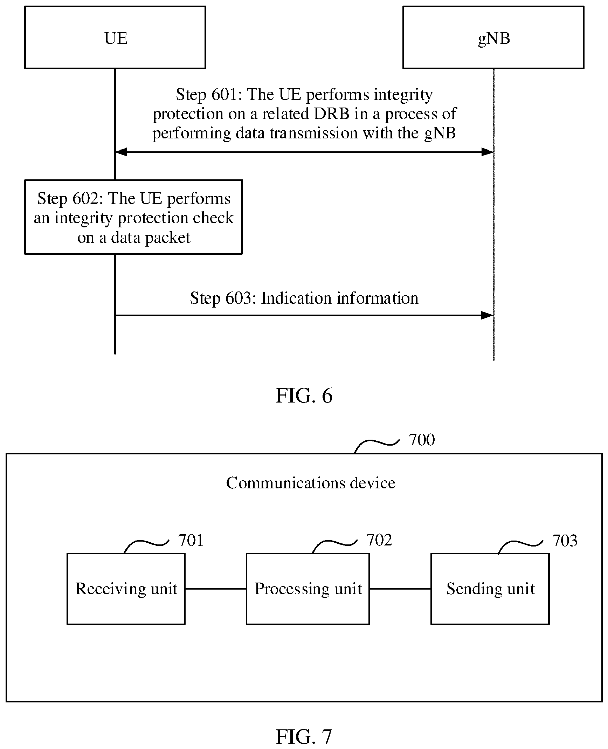

FIG. 6 is a flowchart of performing statistics collection on a data packet that fails in integrity protection detection performed by a communications device.

Step 601: The UE performs integrity protection on a related DRB in a process of performing data transmission with a gNB.

Step 602: The UE performs an integrity protection check on a data packet.

Specifically, when finding the first data packet that fails in the integrity protection check, the UE starts a timer, and starts a counter, where the counter is configured to record a quantity of found data packets that fail in the integrity protection check.

The UE adds 1 to a count value of the counter each time when the UE finds one data packet that fails in the integrity protection check.

Step 603: The UE sends indication information to the gNB when determining that preset duration of the timer does not expire and the quantity recorded by the counter is greater than or equal to a preset threshold.

The indication information is DRB integrity protection failure indication information, DRB release request information, or radio link failure indication information.

Therefore, in Embodiment 5, a prior-art problem of unnecessary reporting of a DRB integrity protection check failure caused by relying only on a threshold is resolved.

Based on the foregoing embodiments, this application provides a communications device. The communications device may use the methods in the foregoing embodiments. The device may be a terminal device, or may be hardware implementing a similar function. As shown in FIG. 7, the communications device includes:
a receiving unit 701, configured to receive a data radio bearer DRB integrity protection activation message sent by a network device; and
a processing unit 702, configured to generate a DRB integrity protection key.

In a possible design, the processing unit 702 is specifically configured to:
generate the DRB integrity protection key when determining that a capability of the communications device satisfies a preset condition; or
generate the DRB integrity protection key when determining that a service type of a first service is a preset service type; or
generate the DRB integrity protection key when determining that a type of the communications device is a preset communications device type; or
generate the DRB integrity protection key based on first information in the DRB integrity protection activation message, where the first information is used to instruct to generate the DRB integrity protection key.

In a possible design, the DRB integrity protection activation message carries first synchronization indication information or a sequence number of a data packet on which integrity protection starts to be performed.

In a possible design, the processing unit 702 is further configured to:
when finding the first target data packet, start a first timer, and start a first counter, where the target data packet is a data packet that fails in integrity protection detection, and the first counter is configured to record a quantity of found target data packets.

In a possible design, the processing unit 702 is further configured to determine that preset duration of the first timer does not expire and the quantity recorded by the first counter is greater than or equal to a preset threshold; and a sending unit 703 is configured to send indication information to the network device; or
the processing unit 702 is further configured to reset the first counter when determining that the preset duration of the first timer expires.

In a possible design, the processing unit 702 is further configured to:
after the sending unit sends the indication information to the network device, stop the first timer; or
stop the first timer and reset the first counter; or
pause or suspend the first timer and the first counter.

In a possible design, the indication information is DRB integrity protection failure indication information, DRB release request information, or radio link failure indication information.

In a possible design, the processing unit 702 is further configured to:
determine to switch from a connected mode to an inactive mode inactive mode, and stop the first timer; or
stop the first counter and reset the first counter; or
pause or suspend the first timer; or
reset the first counter.

In a possible design, the processing unit 702 is further configured to:
after the processing unit generates the DRB integrity protection key, preserve the DRB integrity protection key until the processing unit enters an idle mode or until the processing unit receives a key update message or a DRB integrity protection deactivation message sent by the network device; or
preserve the DRB integrity protection key until a second timer is greater than or equal to a preset threshold.

In a possible design, the processing unit 702 is further configured to:
after the receiving unit receives the key update message sent by the network device, update the DRB integrity protection key when determining that there is a DRB on which DRB integrity protection needs to be performed; or
after the receiving unit receives the key update message sent by the network device, update the DRB integrity protection key; or
delete the DRB integrity protection key when determining that the key update message includes second information, where the second information instructs to delete the DRB integrity protection key.

In a possible design, the receiving unit 701 is further configured to: after the processing unit generates the DRB integrity protection key, receive the DRB integrity protection deactivation message; and
the processing unit 702 is further configured to: after the communications device receives the DRB integrity protection deactivation message, continue preserving the DRB integrity protection key; or
preserve the DRB integrity protection key when determining that there is a DRB on which integrity protection needs to be performed; or
delete the DRB integrity protection key when determining that there is no DRB on which integrity protection needs to be performed; or
preserve the DRB integrity protection key when determining that the DRB integrity key deactivation message includes third information, where the third information instructs to preserve the DRB integrity protection key; or
delete the DRB integrity protection key if when determining that the DRB integrity protection deactivation message includes fourth information, where the fourth information instructs to delete the DRB integrity protection key.

In a possible design, the processing unit 702 is further configured to:
after switching from the connected mode to the inactive mode, preserve the DRB integrity protection key; or
preserve the DRB integrity protection key when determining that there is a DRB on which integrity protection needs to be performed; or
receive an inactive mode entering instruction message sent by the network device, where the inactive mode entering instruction message includes fifth information, and the fifth information instructs to preserve the DRB integrity protection key.

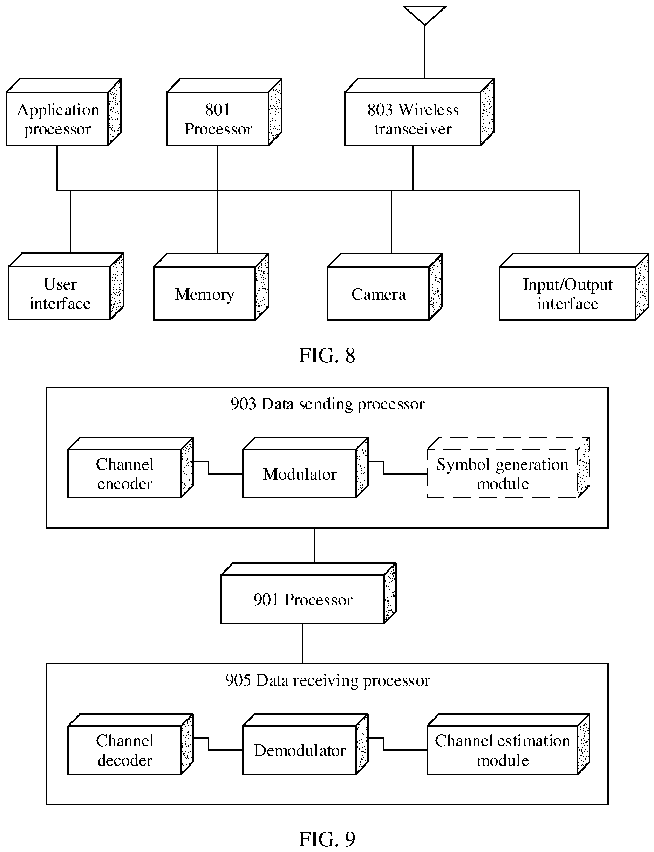

When the communications apparatus in this embodiment is a terminal device, reference may be made to a device shown in FIG. 8. The device includes a processor 801, an application processor, a memory, a user interface, and some other elements (including a device such as a power supply that is not shown). In FIG. 8, the foregoing processing unit may be the processor 801, and implements a corresponding function. The sending unit 703 and/or the receiving unit 701 may be a transceiver 803 in the figure, and implement/implements a corresponding function by using an antenna. It can be understood that the elements shown in the figure are merely examples, and are not necessary elements for completing this embodiment.

When the communications apparatus in this embodiment is a terminal device, reference may be made to a device shown in FIG. 9. In an example, the device can implement a function similar to that of the processor in FIG. 8. In FIG. 9, the device includes a processor, a data sending processor, and a processor. In FIG. 9, the foregoing processing unit may be the processor 901, and implements a corresponding function. The sending unit 703 may be the data sending processor 903 in FIG. 9, and the receiving unit 701 may be the data receiving processor 905 in FIG. 9. Although the figure shows a channel encoder and a channel decoder, it can be understood that these modules are merely examples, and do not constitute any limitative description.

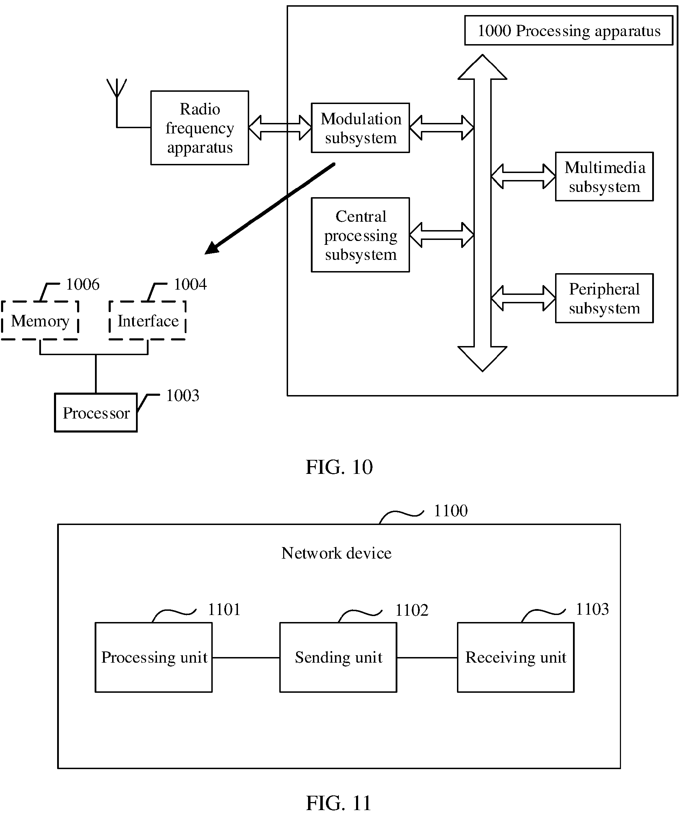

FIG. 10 shows another form of this embodiment. A processing apparatus 1000 includes modules such as a modulation subsystem, a central processing subsystem, and a peripheral subsystem. A communications device in this embodiment may be used as the modulation subsystem in the processing apparatus 1000. Specifically, the modulation subsystem may include a processor 1003 and an interface 1004. The processor 1003 implements a function of the foregoing processing unit, and the interface 1004 implements a function of the sending unit 703 and/or the receiving unit 701. In another form, the modulation subsystem includes a memory 1006, a processor 1003, and a program that is stored in the memory and that can be run on the processor. The processor executes the program to implement the method in one of Embodiments 1 to 5. It should be noted that the memory 1006 may be non-volatile or volatile. The memory 1006 may be located inside the modulation subsystem, or may be located in the processing apparatus 1000, provided that the memory 1006 can be connected to the processor 1003.

Based on the foregoing embodiments, this application provides a network device. The network device may alternatively be hardware implementing a similar function. The network device 1100 includes:
a processing unit 1101, configured to generate a DRB integrity protection activation message; and
a sending unit 1102, configured to send the DRB integrity protection activation message to a communications device.

In a possible design, the DRB integrity protection activation message carries first information, where the first information is used to instruct the communications device to generate the DRB integrity protection key.

In a possible design, the DRB integrity protection activation message further carries first synchronization indication information or a sequence number of a data packet on which integrity protection starts to be performed.

In a possible design, the receiving unit 1103 is configured to: after the sending unit sends the DRB integrity protection activation message, receive indication information, where the indication information is DRB integrity protection failure indication information, DRB release request information, or radio link failure indication information.

In a possible design, the sending unit 1102 is further configured to:
after the sending unit sends the DRB integrity protection activation message, send a key update message, where the key update message includes second information, and the second information instructs the communications device to delete the DRB integrity protection key; or
send a DRB integrity protection deactivation message, where the DRB integrity key deactivation message includes third information, and the third information instructs the communications device to preserve the DRB integrity protection key; or
send a DRB integrity protection deactivation message, where the DRB integrity protection deactivation message includes fourth information, and the fourth information instructs the communications device to delete the DRB integrity protection key; or
send an instruction message instructing the communications device to enter an inactive mode, where the inactive mode entering instruction message includes fifth information, and the fifth information instructs the communications device to preserve the DRB integrity protection key.

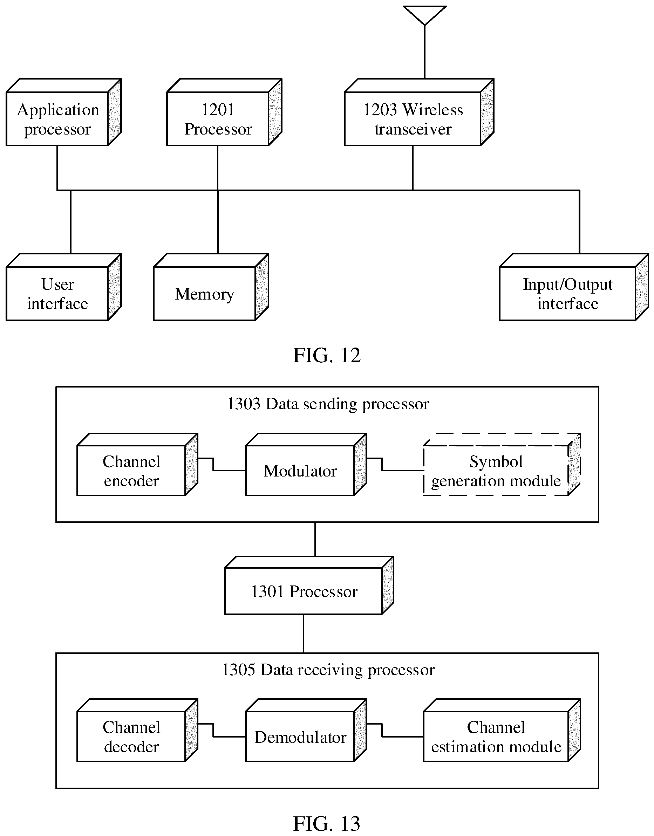

For the network device in this embodiment, refer to a device shown in FIG. 12. The device includes a processor 1201, an application processor, a memory, a user interface, and some other elements (including a device such as a power supply that is not shown). In FIG. 12, the processing unit 1101 may be the processor 1201, and implements a corresponding function. The sending unit 1102 and/or the receiving unit 1103 may be a transceiver 1203 in the figure, and implement/implements a corresponding function by using an antenna. It can be understood that the elements shown in the figure are merely examples, and are not necessary elements for completing this embodiment.

For the network device in this embodiment, refer to a device shown in FIG. 13. In an example, the device can implement a function similar to that of a processor. In FIG. 13, the device includes a processor, a data sending processor, and a processor. In FIG. 13, the processing unit 1101 may be the processor 1301, and implements a corresponding function. The sending unit 1102 may be the data sending processor 1303 in FIG. 13, and the receiving unit 1103 may be the data receiving processor 1305 in FIG. 13. Although the figure shows a channel encoder and a channel decoder, it can be understood that these modules are merely examples, and do not constitute any limitative description.

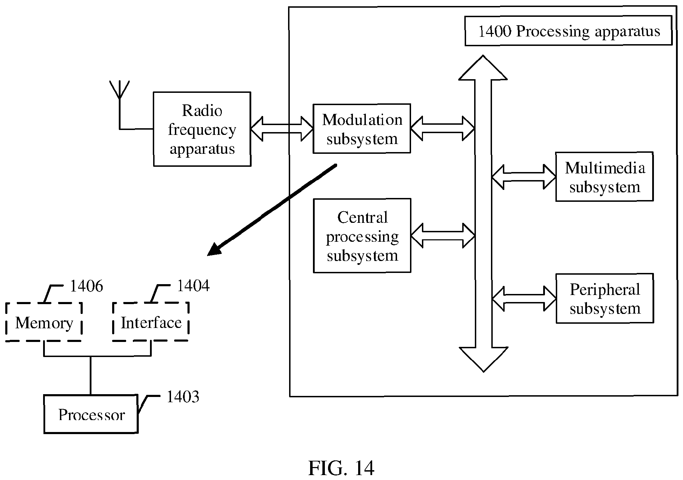

FIG. 14 shows another form of this embodiment. A processing apparatus 1400 includes modules such as a modulation subsystem, a central processing subsystem, and a peripheral subsystem. A communications device in this embodiment may be used as the modulation subsystem in the processing apparatus 1400. Specifically, the modulation subsystem may include a processor 1403 and an interface 1404. The processor 1403 implements a function of the processing unit 1101, and the interface 1404 implements a function of the sending unit 1102 and/or the receiving unit 1103. In another form, the modulation subsystem includes a memory 1406, a processor 1403, and a program that is stored in the memory and that can be run on the processor. The processor executes the program to implement the methods in the foregoing method embodiments. It should be noted that the memory 1406 may be non-volatile or volatile. The memory 1406 may be located inside the modulation subsystem, or may be located in the processing apparatus 1400, provided that the memory 1406 can be connected to the processor 1403.

It can be understood that the sending unit and the receiving unit in FIG. 7 and FIG. 11 can be combined as a transceiver unit, and implement a similar function. Details are not described herein.

This application provides a communications device. The communications device may be a terminal, or may be hardware implementing a similar function.

The communications device includes at least one processor. The processor is coupled to a memory, and the processor is configured to: read an instruction in the memory, and perform the methods in Embodiments 1 to 6 according to the instruction.

This application provides a network device. The network device may alternatively be hardware implementing a similar function.

The communications device includes at least one processor. The processor is coupled to a memory, and the processor is configured to: read an instruction in the memory, and perform the methods in Embodiments 1 to 6 according to the instruction.

This application provides a computer readable storage medium. The computer readable storage medium stores an instruction. When the instruction is being executed, the methods in Embodiments 1 to 6 are performed.

It should be noted that the memory in the foregoing embodiments may be integrated into a processor, or may be independent of a processor. This is not limited in this embodiment.

The processor in the embodiments may be a general purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate, a transistor logic device, or a discrete hardware component. The processor can implement or perform the methods, the steps, and the logical block diagrams that are disclosed in the embodiments of the present invention. The general purpose processor may be a microprocessor, or the processor may be any conventional processor or the like. Steps of the methods disclosed with reference to the embodiments of the present invention may be directly completed by using a hardware decoding processor, or may be completed by using a combination of hardware in the decoding processor and a software module. A software module may be located in a mature storage medium in the art, such as a random access memory (Random Access Memory, RAM), a flash memory, a read-only memory (Read-Only Memory, ROM), a programmable read-only memory, an electrically erasable programmable memory, or a register.

A person skilled in the art should understand that the embodiments of this application may be provided as a method, a system, or a computer program product. Therefore, the embodiments of this application may use a form of hardware only embodiments, software only embodiments, or embodiments with a combination of software and hardware. Moreover, the embodiments of this application may use a form of a computer program product that is implemented on one or more computer-usable storage media (including but not limited to a magnetic disk memory, a CD-ROM, and an optical memory) that include computer-usable program code.

The embodiments of this application are described with reference to the flowcharts and/or the block diagrams of the method, the device (system), and the computer program product according to the embodiments of this application. It should be understood that computer program instructions may be used to implement each process in the flowcharts and/or each block in the block diagrams and a combination of a process in the flowcharts and/or a block in the block diagrams. These computer program instructions may be provided for a general purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer readable memory that can instruct a computer or another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the embodiments of this application without departing from the spirit and scope of this application. This application is intended to cover these modifications and variations provided that they fall within the scope defined by the following claims and their equivalent technologies of this application.

## Claims

1. An integrity protection key management method, wherein the method comprises:
receiving, by a communications device, a data radio bearer DRB integrity protection activation message sent by a network device; and
generating, by the communications device, a DRB integrity protection key.

2. The method according to claim 1, wherein the generating, by the communications device, a DRB integrity protection key comprises:
generating, by the communications device, the DRB integrity protection key when determining that a capability of the communications device satisfies a preset condition; or
generating, by the communications device, the DRB integrity protection key when determining that a service type of a first service is a preset service type; or
generating, by the communications device, the DRB integrity protection key when determining that a type of the communications device is a preset communications device type; or
generating, by the communications device, the DRB integrity protection key based on first information in the DRB integrity protection activation message, wherein the first information is used to instruct the communications device to generate the DRB integrity protection key.

3. The method according to claim 1 or 2, wherein the DRB integrity protection activation message carries first synchronization indication information or a sequence number of a data packet on which integrity protection starts to be performed.

4. The method according to any one of claims 1 to 3, further comprising:
when the communications device finds the first target data packet, starting, by the communications device, a first timer, and starting a first counter, wherein the target data packet is a data packet that fails in integrity protection detection, and the first counter is configured to record a quantity of found target data packets.

5. The method according to claim 4, further comprising:
sending, by the communications device, indication information to the network device when determining that preset duration of the first timer does not expire and the quantity recorded by the first counter is greater than or equal to a preset threshold; or
resetting, by the communications device, the first counter when determining that the preset duration of the first timer expires.

6. The method according to claim 5, wherein after the sending, by the communications device, indication information to the network device, the method further comprises:
stopping, by the communications device, the first timer; or
stopping, by the communications device, the first timer and resetting the first counter; or
pausing or suspending, by the communications device, the first timer and the first counter.

7. The method according to claim 5 or 6, wherein the indication information is DRB integrity protection failure indication information, DRB release request information, or radio link failure indication information.

8. The method according to any one of claims 4 to 7, further comprising:
determining, by the communications device, to switch from a connected mode to an inactive inactive mode, and stopping, by the communications device, the first timer; or
stopping, by the communications device, the first counter and resetting the first counter; or
pausing or suspending, by the communications device, the first timer; or
resetting, by the communication device, the first counter.

9. The method according to any one of claims 1 to 8, further comprising:
after receiving a key update message sent by the network device, updating, by the communications device, the DRB integrity protection key when determining that there is a DRB on which DRB integrity protection needs to be performed; or
after receiving a key update message sent by the network device, updating, by the communications device, the DRB integrity protection key; or
deleting, by the communications device, the DRB integrity protection key when determining that the key update message comprises second information, wherein the second information instructs the communications device to delete the DRB integrity protection key.

10. The method according to any one of claims 1 to 9, wherein after the generating, by the communications device, a DRB integrity protection key, the method further comprises:
receiving, by the communications device, a DRB integrity protection deactivation message; and
after the communications device receives the DRB integrity protection deactivation message,
continuing preserving, by the communications device, the DRB integrity protection key; or
preserving, by the communications device, the DRB integrity protection key when determining that there is a DRB on which integrity protection needs to be performed; or
deleting, by the communications device, the DRB integrity protection key when determining that there is no DRB on which integrity protection needs to be performed; or
preserving, by the communications device, the DRB integrity protection key when determining that the DRB integrity key deactivation message comprises third information, wherein the third information instructs the communications device to preserve the DRB integrity protection key; or
deleting, by the communications device, the DRB integrity protection key when determining that the DRB integrity protection deactivation message comprises fourth information, wherein the fourth information instructs the communications device to delete the DRB integrity protection key.

11. The method according to claim 9 or 10, wherein after the generating, by the communications device, a DRB integrity protection key, further comprising:
preserving, by the communications device, the DRB integrity protection key until the communications device enters an idle mode or until the communications device receives the key update message or the DRB integrity protection deactivation message sent by the network device; or
preserving, by the communications device, the DRB integrity protection key until a second timer is greater than or equal to a preset threshold.

12. The method according to any one of claims 1 to 11, wherein after the communications device switches from the connected mode to the inactive mode, the method further comprises:
preserving, by the communications device, the DRB integrity protection key; or
preserving, by the communications device, the DRB integrity protection key when determining that there is a DRB on which integrity protection needs to be performed; or
receiving, by the communications device, an inactive mode entering instruction message sent by the network device, wherein the inactive mode entering instruction message comprises fifth information, and the fifth information instructs the communications device to preserve the DRB integrity protection key.

13. An integrity protection key management method, wherein the method comprises:
generating, by a network device, a DRB integrity protection activation message; and
sending, by the network device, the DRB integrity protection activation message to a communications device.

14. The method according to claim 13, wherein the DRB integrity protection activation message carries first information, and the first information is used to instruct the communications device to generate the DRB integrity protection key.

15. The method according to claim 13, wherein the DRB integrity protection activation message further carries first synchronization indication information or a sequence number of a data packet on which integrity protection starts to be performed.

16. The method according to any one of claims 13 to 15, wherein after the sending, by the network device, the DRB integrity protection activation message, the method further comprises:
receiving, by the network device, indication information, wherein the indication information is DRB integrity protection failure indication information, DRB release request information, or radio link failure indication information.

17. The method according to any one of claims 13 to 16, wherein after the sending, by the network device, the DRB integrity protection activation message, the method further comprises:
sending, by the network device, a key update message, wherein the key update message comprises second information, and the second information instructs the communications device to delete the DRB integrity protection key; or
sending, by the network device, a DRB integrity protection deactivation message, wherein the DRB integrity key deactivation message comprises third information, and the third information instructs the communications device to preserve the DRB integrity protection key; or
sending, by the network device, a DRB integrity protection deactivation message, wherein the DRB integrity protection deactivation message comprises fourth information, and the fourth information instructs the communications device to delete the DRB integrity protection key; or
sending, by the network device, an instruction message instructing the communications device to enter an inactive mode, wherein the inactive mode entering instruction message comprises fifth information, and the fifth information instructs the communications device to preserve the DRB integrity protection key.

18. A communications device, wherein the communications device comprises:
a receiving unit, configured to receive a data radio bearer DRB integrity protection activation message sent by a network device; and
a processing unit, configured to generate a DRB integrity protection key.

19. The communications device according to claim 18, wherein the processing unit is specifically configured to:
generate the DRB integrity protection key when determining that a capability of the communications device satisfies a preset condition; or
generate the DRB integrity protection key when determining that a service type of a first service is a preset service type; or
generate the DRB integrity protection key when determining that a type of the communications device is a preset communications device type; or
generate the DRB integrity protection key based on first information in the DRB integrity protection activation message, wherein the first information is used to instruct to generate the DRB integrity protection key.

20. The communications device according to claim 18 or 19, wherein the DRB integrity protection activation message carries first synchronization indication information or a sequence number of a data packet on which integrity protection starts to be performed.

21. The communications device according to any one of claims 18 to 20, wherein the processing unit is further configured to:
when finding the first target data packet, start a first timer and start a first counter, wherein the target data packet is a data packet that fails in integrity protection detection, and the first counter is configured to record a quantity of found target data packets.

22. The communications device according to claim 21, wherein the processing unit is further configured to determine that preset duration of the first timer does not expire and the quantity recorded by the first counter is greater than or equal to a preset threshold, and a sending unit is configured to send indication information to the network device; or
the processing unit is further configured to reset the first counter when determining that the preset duration of the first timer expires.

23. The communications device according to claim 22, wherein the processing unit is further configured to:
after the sending unit sends the indication information to the network device, stop the first timer; or
stop the first timer and reset the first counter; or
pause or suspend the first timer and the first counter.

24. The communications device according to claim 22 or 23, wherein the indication information is DRB integrity protection failure indication information, DRB release request information, or radio link failure indication information.

25. The communications device according to any one of claims 21 to 24, wherein the processing unit is further configured to:
determine to switch from a connected mode to an inactive inactive mode, and stop the first timer; or
stop the first counter and reset the first counter; or
pause or suspend the first timer; or
reset the first counter.

26. The communications device according to any one of claims 18 to 25, wherein the processing unit is further configured to:
after the receiving unit receives a key update message sent by the network device, update the DRB integrity protection key when determining that there is a DRB on which DRB integrity protection needs to be performed; or
after the receiving unit receives the key update message sent by the network device, update the DRB integrity protection key; or
delete the DRB integrity protection key when determining that the key update message comprises second information, wherein the second information instructs to delete the DRB integrity protection key.

27. The communications device according to any one of claims 18 to 26, wherein the receiving unit is further configured to: after the processing unit generates the DRB integrity protection key, receive a DRB integrity protection deactivation message;
the processing unit is further configured to: after the communications device receives the DRB integrity protection deactivation message, continue preserving the DRB integrity protection key; or
preserve the DRB integrity protection key when determining that there is a DRB on which integrity protection needs to be performed; or
delete the DRB integrity protection key when determining that there is no DRB on which integrity protection needs to be performed; or
preserve the DRB integrity protection key when determining that the DRB integrity key deactivation message comprises third information, wherein the third information instructs to preserve the DRB integrity protection key; or
delete the DRB integrity protection key when determining that the DRB integrity protection deactivation message comprises fourth information, wherein the fourth information instructs to delete the DRB integrity protection key.

28. The communications device according to claim 26 or 27, wherein the processing unit is further configured to:
after the processing unit generates the DRB integrity protection key, preserve the DRB integrity protection key until the processing unit enters an idle mode or until the processing unit receives the key update message or the DRB integrity protection deactivation message sent by the network device; or
preserve the DRB integrity protection key until a second timer is greater than or equal to a preset threshold.

29. The communications device according to any one of claims 18 to 28, wherein the processing unit is further configured to:
after switching from the connected mode to the inactive mode, preserve the DRB integrity protection key; or
preserve the DRB integrity protection key when determining that there is a DRB on which integrity protection needs to be performed; or
receive an inactive mode entering instruction message sent by the network device, wherein the inactive mode entering instruction message comprises fifth information, and the fifth information instructs to preserve the DRB integrity protection key.

30. A network device, wherein the network device comprises:
a processing unit, configured to generate a DRB integrity protection activation message; and
a sending unit, configured to send the DRB integrity protection activation message to a communications device.

31. The network device according to claim 30, wherein the DRB integrity protection activation message carries first information, and the first information is used to instruct the communications device to generate the DRB integrity protection key.

32. The network device according to claim 31, wherein the DRB integrity protection activation message further carries first synchronization indication information or a sequence number of a data packet on which integrity protection starts to be performed.

33. The network device according to any one of claims 30 to 32, wherein the receiving unit is configured to: after the sending unit sends the DRB integrity protection activation message, receive indication information, wherein the indication information is DRB integrity protection failure indication information, DRB release request information, or radio link failure indication information.

34. The network device according to any one of claims 30 to 33, wherein the sending unit is further configured to:
after the sending unit sends the DRB integrity protection activation message, send a key update message, wherein the key update message comprises second information, and the second information instructs the communications device to delete the DRB integrity protection key; or
send a DRB integrity protection deactivation message, wherein the DRB integrity key deactivation message comprises third information, and the third information instructs the communications device to preserve the DRB integrity protection key; or
send a DRB integrity protection deactivation message, wherein the DRB integrity protection deactivation message comprises fourth information, and the fourth information instructs the communications device to delete the DRB integrity protection key; or
send an instruction message instructing the communications device to enter an inactive mode, wherein the inactive mode entering instruction message comprises fifth information, and the fifth information instructs the communications device to preserve the DRB integrity protection key.

35. A computer readable storage medium, wherein the computer readable storage medium stores a computer program, and when the program is executed by a processor, the integrity protection key management method according to any one of claims 1 to 17 is implemented.

36. A communications apparatus, comprising a memory, a processor, and a program that is stored in the memory and that can be run on the processor, wherein when executing the program, the processor implements the communication method according to any one of claims 1 to 17.
